# EUROPÄISCHE PATENTANMELDUNG

(11) **EP 2 476 867 A1**
(43) Veröffentlichungstag der Anmeldung: **18.07.2012**
(21) Anmeldenummer: 11150954.3
(22) Anmeldetag: 14.01.2011
(51) Int. Cl.: F01D 17/08, F01D 25/30, G01K 7/02

(54) **Abgasstrecke für eine Gasturbine**

(71) Anmelder: SIEMENS AKTIENGESELLSCHAFT, 80333 München (DE)
(72) Erfinder: Hofmann, Markus, 44581, Castrop-Rauxel (DE); Lüttenberg, Andreas, 45289, Essen (DE)

(57) **Zusammenfassung**

Die Erfindung betrifft eine Abgasstrecke (11) für eine Gasturbine (10), mit einem zumindest zweischaligen Gehäuse umfassend als erste Schale einen äußeren Gehäusemantel (38), in dessen Inneren eine einen Abgaskanal (24) radial außen begrenzende Kanalwand (28) als zweite Schale angeordnet ist, wobei zumindest ein in den Abgaskanal (24) hineinragender Sensor (44) zur Erfassung einer Eigenschaft des Abgases vorgesehen ist. Um eine wesentlich vereinfachte Konstruktion für die Befestigung des Sensors (44) an der Abgasstrecke (11) einer Gasturbine (10) anzugeben, welche zudem besonders kostengünstig ist und mittels der sich der Sensor (44) vergleichsweise einfach austauschen lässt, wird vorgeschlagen, dass dieser ausschließlich an der Kanalwand (28) befestigt und durch den Abgaskanal (24) ein- und/oder ausbaubar ist. Durch den vereinfachten Austausch der Sensoren (44) lässt sich dieser schneller durchführen, so dass die Verfügbarkeit einer mit der Erfindung ausgestatteten Gasturbine (10) verbessert ist.

## Beschreibung

Die Erfindung betrifft eine Abgasstrecke für eine Gasturbine, mit einem zumindest zweischaligen Gehäuse umfassend als erste Schale einen äußeren Gehäusemantel, in dessen Inneren eine einen Abgaskanal radial außen begrenzende Kanalwand als zweite Schale angeordnet ist, wobei zumindest ein in den Abgaskanal hineinragender Sensor zur Erfassung einer Eigenschaft des Abgases vorgesehen ist.

Die eingangs beschriebene Anordnung ist beispielsweise in der EP 2 187 019 A1 gezeigt. Der in den Abgaskanal hineinragende Sensor ist axial zwischen der Laufschaufel der letzten Turbinenstufe und der stromabwärts davon angeordneten Stütze des turbinenseitigen Radiallagers angesiedelt. Lanzenartig erstreckt sich der Sensor von außerhalb durch den äußeren Gehäusemantel und die den Abgaskanal der Gasturbine radial außen begrenzenden Kanalwand, um freistehend im Abgaskanal zu enden. Der Sensor ist als Thermoelement ausgebildet.

Neben dem dargestellten Sensor sind eine Vielzahl gleichartiger Thermoelemente in Umfangsrichtung des Abgaskanals regelmäßig verteilt, um in der Messebene eine Abgastemperaturverteilung erfassen zu können. Diese wird zur Steuerung und Überwachung der Gasturbine verwendet. Da Abgase bei stationären Gasturbinen eine Temperatur von etwa 600°C aufweisen können, sind die Thermoelemente enormen Temperaturbelastungen ausgesetzt, was deren Lebensdauer begrenzt. Aus diesem und sicherheitsrelevanten Gründen werden sie häufig jeweils auch in redundanter Weise ausgebildet.

Dennoch kann es sein, dass einzelne Fehlmessungen augrund defekter Thermoelemente auftreten, die eine lokale unzulässig hohe Abgastemperatur anzeigen. Unzulässige hohe Abgastemperaturen können auch durch eine ungleichmäßige Anströmung der Thermoelemente entstehen, welche durch vor den Thermoelementen angeordnete Störkanten erzeugt werden. In diesen Fällen wird die Gasturbine mit Hilfe eines Schnellschlusses abgeschaltet, obwohl tatsächlich keine unzulässige Temperaturüberhöhung vorliegt.

Die somit nicht erforderliche Abschaltung der Gasturbine führt zu einer ungewünschten Reduzierung der Verfügbarkeit der Gasturbine und zu einer vermeidbaren Überbelastung von Heißgasbauteilen, da der Schnellschluss bekanntermaßen zu Temperaturschocks von Heißgasbauteilen führt, was deren Lebensdauer beeinträchtigt.

Sofern defekte Thermoelemente vorhanden sind, besteht zudem das Bestreben, diese schnellstmöglich auszutauschen. Vor dem Austausch muss die Gasturbine jedoch zuerst stillgesetzt werden und abkühlen. Erst danach haben Monteure Zugang zu den defekten Thermoelementen, um diese durch funktionsfähige ersetzen zu können.

Aufgrund der zweischaligen Ausführung der Gasturbine im axialen Abschnitt, in dem die Thermoelemente angesiedelt sind, ist weiterhin erforderlich, dass das betreffende Thermoelement in jeder Schale zuverlässig und gasdicht befestigt ist, um Verluste im Abgas durch gegebenenfalls vorhandene Spalte zu vermeiden. Hierzu sind spezielle Durchführungen für die Thermoelemente erforderlich. Diese erschweren den Austausch des betreffenden Thermoelementes.

Zudem ist zu berücksichtigen, dass der vergleichsweise massive äußere Gehäusemantel gegenüber der dazu wesentlich dünneren inneren Kanalwand unterschiedliche thermische Eigenschaften aufweist, was dazu führt, dass diese beiden Bauteile im instationären Betrieb - d.h. beim Hochfahren der Gasturbine und beim Abschalten der Gasturbine - sich unterschiedlich schnell ausdehnen bzw. schrumpfen. Diese zeitlich versetzten Dehnungen und Schrumpfungen müssen von den Durchführungen ausgeglichen bzw. kompensiert werden, um Defekte an den Thermoelementen zu vermeiden. Dies hat zur Folge, dass die Befestigung des Thermoelements in der dickwandigen Gehäusewand und in der dünnwandigen Kanalwand insgesamt aufwändig und störanfällig sein kann.

Aufgabe der Erfindung ist daher die Bereitstellung einer Abgasstrecke für eine Gasturbine mit einem zumindest zweischaligen Gehäuse, in dessen Inneren ein Abgaskanal vorhanden ist mit einem sich darein ersteckenden Sensor, der hinsichtlich seiner konstruktiven Befestigung vergleichsweise einfach ausgebildet ist und gleichzeitig Abgasverluste durch eine unzureichende Abdichtung des Sensors in der Kanalwand verhindert. Weitere Aufgabe ist es, die Verfügbarkeit der Abgasstrecke bzw. einer damit ausgestatteten Gasturbine zu erhöhen.

Die der Erfindung zugrundeliegende Aufgabe wird mit einer Abgasstrecke gemäß den Merkmalen des Anspruchs 1 gelöst. Weitere vorteilhafte Merkmale sind in den Unteransprüchen aufgelistet und können in vorteilhafter Art und Weise miteinander kombiniert werden.

Der Erfindung liegt die Erkenntnis zu Grunde, dass die unterschiedlich schnellen Wärmedehnungen von der äußeren Schale und der inneren Schale vollkommen zu vernachlässigen sind, wenn der Sensor oder die Sensoren ausschließlich an der inneren Schale - der Kanalwand - befestigt ist bzw. sind. Um gleichzeitig eine einfache Zugänglichkeit zum Sensor zu erhalten, der einen besonders schnellen Austausch ermöglicht, ist die Befestigung so konstruiert und ausgestaltet, dass der Sensor durch den Abgaskanal ein- und/oder ausgebaut werden kann.

Da der Sensor ausschließlich an der Kanalwand befestigt ist, ist eine Durchführung des Sensors durch den äußeren Gehäusemantel nicht mehr erforderlich. Dies vereinfacht die Konstruktion des Gehäusemantels. Gleichfalls kann die Abdichtung des Sensors an der Kanalwand vergleichsweise einfach ausgebildet sein, da die thermisch bedingte Relativbewegung der beiden Schalen für die Sensorbefestigung nun unerheblich ist. Darüber hinaus hat die vorgestellte Lösung erhebliche Kostenvorteile gegenüber einem durch beide Schalen der Abgasstrecke durchgeführte Sensoren aufgrund ihrer strukturellen Einfachheit.

Ein weiterer Vorteil ist, dass auch bereits installierte Abgasstrecken bzw. Gasturbinen nachträglich mit geringem Aufwand erfindungsgemäß umgerüstet werden können. Abgesehen davon verbessert sich die Verfügbarkeit einer damit ausgestatteten Gasturbine, da durch die Ein- und Ausbaubarkeit des Sensors nach innen - in den Abgaskanal - weniger Zeitaufwand für den Austausch von Sensoren erforderlich ist.

Zwecksmäßigerweise ist der Sensor als Thermoelement ausgebildet, welcher im Abgaskanal freistehend endet.

Um eine besonders zuverlässige Befestigung des Sensors zu ermöglichen, ist an einer dem Abgaskanal abgewandten Seite der Kanalwand für jeden Sensor eine lokale Verdickung angesiedelt, an bzw. in welcher der Sensor wiederlösbar befestigt werden kann. Vorzugsweise handelt es sich bei der lokalen Verdickung um eine an der Rückseite der Kanalwand umlaufend angeschweißte Mutter, in deren Innengewinde der Sensor mit einem dazu korrespondierenden Gewinde eingeschraubt werden kann. Diese Anordnung verändert die Aerodynamik des Abgaskanals nicht, was besonders gewünscht ist, wenn dieser als Abgasdiffusor ausgestaltet ist.

Selbstverständlich weist die Kanalwand im Bereich der Gewindeöffnung der Mutter ein entsprechendes Loch auf, durch welches der Sensor aus dem Inneren des Abgaskanals in die rückseitig angeschweißte Mutter eingeschraubt werden kann. Diese Ausgestaltung ist insbesondere leicht nachträglich einbaubar bei existierenden Gasturbinen, ohne dass wesentliche konstruktive Änderungen der Abgasstrecke erforderlich sind. Gemäß einer weiteren vorteilhaften Ausgestaltung der Abgasstrecke sind die Kanalwand und der Gehäusemantel unter Bildung eines Zwischenraums zueinander beabstandet, wobei im Zwischenraum eine Messleistung des Sensors in Axialrichtung geführt ist. Dies ermöglicht die Verlegung der ggf. sogar wärmeisolierten Messleitung des Sensors in einem Raum mit geringerer Betriebstemperatur. Dabei wird vorzugsweise die Messleitung bis in den axialen Abschnitt der Abgasstrecke verlegt, in dem üblicherweise der sogenannte Lagerstern angesiedelt ist, welcher das turbinenseitige Rotorlager radial abstützt. Gerade in diesem axialen Abschnitt befindet sich konstruktionsbedingt häufig eine Montageöffnung zu dem besagten Zwischenraum, die Monteure dafür nutzen können, die Mess-leitungen des Sensors nach dem Einfädeln in die Öffnung der Kanalwand und in die Öffnung der angeschweißten Schraubenmutter zum Lagerstern hin zu ziehen.

Insgesamt wird mit der Erfindung eine Abgasstrecke für eine Gasturbine angegeben, die ein zumindest zweischaliges Gehäuse mit einer ersten Schale - einem weiter außen angeordneten Gehäusemantel - und einer zweiten Schale - einer einen Abgaskanal radial außen begrenzenden Kanalwand - umfasst, wobei zumindest ein in den Abgaskanal hineinragender Sensor zur Erfassung einer Eigenschaft des Abgases vorgesehen ist. Um eine besonders einfache Zugänglichkeit zum Sensor zu erreichen und dessen Austausch auch ohne das aufwändige Einfädeln in zwei Durchführungen zu ermöglichen, wird vorgeschlagen, dass der Sensor vom Abgaskanal aus ausschließlich an der Kanalwand wiederlösbar befestigt ist.

Weitere Vorteile und Merkmale der Erfindung ergeben sich anhand der nachfolgenden Figurenbeschreibung. Es zeigt:

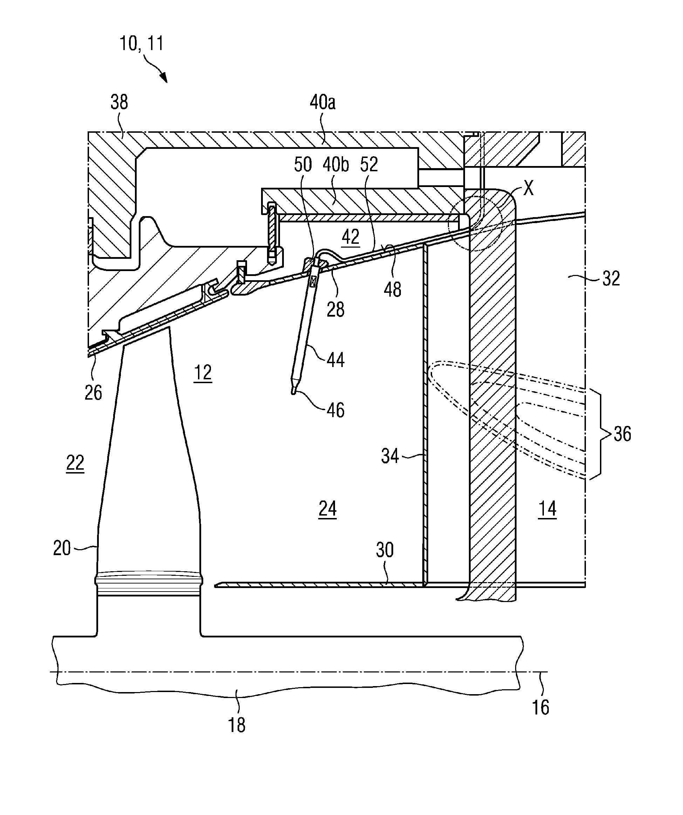

- Figur 1: einen Ausschnitt durch den Längsschnitt einer Gasturbine im axialen Abschnitt zwischen Turbinenausgang und turbinenseitigem Lagerstern.

Figur 1 zeigt einen Ausschnitt durch den Längsschnitt einer Gasturbine 10 im axialen Abschnitt von Turbinenausgang 12 und turbinenseitigem Lagerstern 14 als ein Teil einer Abgasstrecke 11 der Gasturbine 10. Der Längsschnitt erstreckt sich einerseits entlang der Maschinenachse 16, um die sich der Rotor 18 der Gasturbine 10 drehen kann, und andererseits der dazu senkrecht orientierten Radialrichtung.

Am Rotor 18, dessen Welle monolithisch ausgestaltet sein kann oder sich auch aus mehreren durch einen Zuganker verspannten Rotorscheiben zusammensetzen kann, sind am Außenumfang strahlenartig angeordnete Laufschaufeln 20 vorgesehen, die den Laufschaufelkranz der letzten Turbinenstufe der Gasturbine 10 bilden. Diese können im ringförmigen Kanal 22 umlaufen, welcher auch durch radial außen liegende Führungsringsegmente 26 begrenzt ist. Der Kanal 22 geht in einen Abgaskanal 24 über, welcher ebenso ringförmig zumeist als Axialdiffusor ausgebildet ist. Der Abgaskanal 24 wird radial außen von einer im Querschnitt kreisförmigen Kanalwand 28 begrenzt und radial innen von einer Nabenwand 30. Im dargestellten Ausführungsbeispiel ist die Nabenwand 30 zylindrisch ausgebildet, wohingegen die Kanalwand 28 in Strömungsrichtung konisch divergiert, wodurch der Abgaskanal 24 seine Diffusorgestalt erhält. Im Abgaskanal 24 sind in einstelliger Anzahl Lagerstreben 32 angeordnet, deren Vorderkante 34 im Längsschnitt dargestellt ist und deren aerodynamisch gewölbtes Profil durch eine um 90° gedrehte Darstellung 36 gezeigt ist.

Die Kanalwand 28 wird von einem äußeren im Querschnitt kreisförmigen Gehäusemantel 38 umgriffen. Der Gehäusemantel 38 ist im gezeigten Ausführungsbeispiel als massive, d.h. eher dickwandige einteilige Konstruktion ausgeführt mit zwei parallelen zylindrischen Wänden 40a, 40b, die axial überlappend radial zueinander beabstandet sind. Zwischen der inneren Wand 40b und der Kanalwand 28 ist ein Zwischenraum 42 vorgesehen. In Bezug auf den Abgaskanal 24 ist dieser somit zumindest von zwei Schalen umgeben, wobei die erste Schale vom äußeren Gehäusemantel 38 gebildet ist und die zweite Schale von der Kanalwand 28. Aufgrund der axial überlappenden Wände 40a, 40b des äußeren Gehäusemantels 38 könnte man ggf. auch von einer dreischaligen Ausgestaltung sprechen, wobei in diesem Fall die erste Schale von der äußeren Wand 40a, die zweite Schale von der inneren Wand 40b und die dritte Schale von der Kanalwand 28 gebildet ist.

Im axialen Abschnitt zwischen den Laufschaufeln 20 der letzten Turbinenstufe und den Lagerstreben 32 ist an der Kanalwand 28 ein lanzenartiger Sensor 44 dargestellt. Der lanzenartige Sensor 44 ist als Thermoelement ausgebildet, mit dem die an seiner Spitze 46 auftretende Temperatur des daran vorbeiströmenden Abgases erfasst werden kann. Aus Gründen der Übersichtlichkeit sind identische Sensoren, die an der gleichen axialen Position im Abgaskanal 24, jedoch auf einer anderen Umfangsposition angeordnet sind, nicht weiter dargestellt. Mit Hilfe der beschriebenen Sensoren 44 ist eine sogenannte Abgastemperaturverteilung während des Betriebs der Gasturbine 10 erfassbar, mit deren Hilfe in bekannter Manier einerseits der Betrieb der Gasturbine 10 geregelt und andererseits überwacht werden kann. Selbstverständlich können auch andere Eigenschaften als die Temperatur des Abgases von den Sensoren erfasst werden. In diesem Falle sind die Sensoren nicht als Thermoelemente ausgebildet, sondern entsprechend angepasst.

Die Kanalwand 28 weist eine nach außen gerichtete Rückseite 48 auf, an der eine Schraubenmutter 50 angeschweißt ist. Im Bereich der Gewindeöffnung der Schraubenmutter 50 ist in der Kanalwand 28 eine Öffnung vorgesehen, so dass der Sensor 44 durch die Öffnung in das Innengewinde der Schraubenmutter 50 von innen - d.h. vom Abgaskanal 24 aus - eingeschraubt werden kann. Zuvor ist die am Sensor 44 befestigte Messleitung 52 durch die Öffnung der Kanalwand und der Gewindeöffnung der Schraubenmutter 50 durchzuführen.

Da der Zwischenraum 42 durch eine nicht weiter dargestellte Öffnung im Bereich X für einen Monteur ohne weiteres zugänglich ist, kann die darin eingefädelte Messleitung 52 nach dem Einschrauben des Sensors 44 in die Schraubenmutter 50 ergriffen und an dafür vorgesehene elektrische Anschlüsse kontaktiert werden.

Bei der vorgeschlagenen Ausgestaltung ist es vergleichsweise einfach möglich, defekte Sensoren 44 oder Thermoelemente auszutauschen, da diese ausschließlich an der Kanalwand 28 wiederlösbar befestigt sind und dabei durch den Abgaskanal 24 ein- bzw. ausgebaut werden können. Zudem hat die vorgeschlagene Ausgestaltung den Vorteil, dass außerhalb der Kanalwand 28 angesiedelte Schalen des Gehäuses keine Verbindung mit dem Sensor 44 aufweisen und eine Abdichtung des Sensors 44 in diesen Schalen nicht erforderlich ist. Ein weiterer Vorteil liegt darin, dass der Sensor 44 nunmehr an nur noch einer Schale befestigt ist. Ein Durchdringen von mehreren Räumen der Gasturbine 10 mit unterschiedlichen Drücken wird somit vermieden, wodurch die ansonsten damit einhergehenden Abdichtungen ersatzlos entfallen können. Dies vereinfacht zum einen die Konstruktion der Gasturbine 10 und senkt zum anderen die Anzahl der Gasturbinen-Bauteile. Letztgenanntes ist nicht nur kostensparend, sondern verringert auch die Ausfallwahrscheinlichkeit der Gasturbine.

Zudem müssen bei der Auslegung und Konstruktion der Gasturbine 10 thermische Verschiebungen der beiden Schalen gegeneinander nicht berücksichtigt werden.

Insgesamt betrifft die Erfindung eine Abgasstrecke 11 für eine Gasturbine 10, mit einem zumindest zweischaligen Gehäuse umfassend als erste Schale einen äußeren Gehäusemantel 38, in dessen Inneren eine einen Abgaskanal 24 radial außen begrenzende Kanalwand 28 als zweite Schale angeordnet ist, wobei zumindest ein in den Abgaskanal 24 hineinragender Sensor 44 zur Erfassung einer Eigenschaft des Abgases vorgesehen ist. Um eine wesentlich vereinfachte Konstruktion für die Befestigung des Sensors 44 an der Abgasstrecke 11 einer Gasturbine 10 anzugeben, welche zudem besonders kostengünstig ist und mittels der sich der Sensor 44 vergleichsweise einfach austauschen lässt, wird vorgeschlagen, dass dieser ausschließlich an der Kanalwand 28 befestigt und durch den Abgaskanal 24 ein- und/oder ausbaubar ist. Durch die verbesserte Zugänglichkeit der Sensoren 44 lassen sich diese schneller austauschen, so dass die Verfügbarkeit einer mit der Erfindung ausgestatteten Gasturbine 10 verbessert ist. Auch können damit unbegründete Schnellschlüsse von Gasturbinen 10, die durch Fehlmessungen aufgrund defekter Sensoren 44 bisher durchgeführt wurden, zumindest weitgehend vermieden werden.

## Patentansprüche

1. Abgasstrecke (11) für eine Gasturbine (10),
mit einem zumindest zweischaligen Gehäuse umfassend als erste Schale einen äußeren Gehäusemantel (38), in dessen Inneren eine einen Abgaskanal (24) radial außen begrenzende Kanalwand (28) als zweite Schale angeordnet ist,
wobei zumindest ein in den Abgaskanal (24) hineinragender Sensor (44) zur Erfassung einer Eigenschaft des Abgases vorgesehen ist,
**dadurch gekennzeichnet, dass**
der Sensor (44) ausschließlich an der Kanalwand (28) befestigt und durch den Abgaskanal (24) ein- und/oder ausbaubar ist.

2. Abgasstrecke (11) nach Anspruch 1,
bei der der Sensor (44) als Thermoelement ausbildet ist, welcher im Abgaskanal (24) freistehend endet.

3. Abgasstrecke (11) nach Anspruch 1 oder 2,
bei der der Sensor (44) an der Kanalwand (28) angeschraubt ist.

4. Abgasstrecke (11) nach Anspruch 1, 2 oder 3,
bei der an einer dem Abgaskanal (24) abgewandten Seite der Kanalwand (28) eine lokale Verdickung zur Befestigung des Sensors (44) angesiedelt ist.

5. Abgasstrecke (11) nach einem der vorangehenden Ansprüche,
bei der die Kanalwand (28) und der Gehäusemantel (38) unter Bildung eines Zwischenraums (42) zueinander beabstandet sind, in welchem eine Messleitung (52) des Sensors (44) in Axialrichtung geführt ist.
